**Europäisches Patentamt**

**European Patent Office**

**Office européen des brevets**

(19)

(11) Veröffentlichungsnummer: **0 030 285**
**A2**

(12)

# EUROPÄISCHE PATENTANMELDUNG

(21) Anmeldenummer: 80107058.2

(22) Anmeldetag: 14.11.80

(51) Int. Cl.³: **B 05 D 3/00, C 09 D 3/48**

(30) Priorität: 26.11.79 DE 2947597

(43) Veröffentlichungstag der Anmeldung: 17.06.81
Patentblatt 81/24

(84) Benannte Vertragsstaaten: **AT BE CH DE FR GB IT LI NL SE**

(71) Anmelder: **BASF Farben + Fasern Aktiengesellschaft, Am Neumarkt 30, D-2000 Hamburg 70 (DE)**

(72) Erfinder: **Schwarz, Günther, Dr., Dipl.-Chem., Zum Hiltruper See 25, D-4400 Münster (DE)**
Erfinder: **Häring, Ernst, Birkhahnstrasse 6, D-5010 Bergheim (DE)**
Erfinder: **Lauer, Jürgen, Bergisch Gladbacher Strasse 1164, D-5000 Köln 80 (DE)**

(74) Vertreter: **Habbel, Hans-Georg, Dipl.-Ing., Postfach 3429 Am Kanonengraben 11, D-4400 Münster (DE)**

(54) **Verfahren zum Herstellen von Filmen oder Überzügen.**

(57) Das Verfahren zum Herstellen von Filmen oder Überzügen aus einem Überzugsgemisch auf Basis von durch Strahlen härtbaren Kunstharzen ist dadurch gekennzeichnet, daß man Kunstharze mit polymerisierbaren C-C-Doppelbindungen aus der Gruppe der ungesättigten Polyesterharze, der Polyesteracrylate, Ätheracrylate, Epoxidacrylate, Urethanacrylate oder der ungesättigten Acrylatharze gegebenenfalls zusammen mit copolymerisierbaren Monomeren in Kombination mit Aminoplastharzen oder Phenoplastharzen und zusätzlich polykondensationsfähigen Verbindungen aus der Gruppe der niedermolekularen Polyesterharze, der Alkydharze oder der polyvalenten Alkohole, gegebenenfalls mit Härtungsbeschleunigern und gegebenenfalls zusätzlich Lösungsmitteln, Pigmenten, Füllstoffen der aufeinanderfolgenden kombinierten Einwirkung von ionisierenden Strahlen oder UV-Strahlen und Wärmestrahlen oder Heißluft unterwirft, bis der gesamte Film oder Überzug gehärtet ist.

- 1 -

## Verfahren zum Herstellen von Filmen oder Überzügen

Die Erfindung bezieht sich auf ein Verfahren zum Herstellen von Filmen oder Überzügen auf Basis von durch Strahlen härtbaren Kunstharzen. Hierbei werden die auf einem Substrat aufgebrachten Filme oder Überzüge durch kombinierte Einwirkung von Strahlung und Wärme zu festen Filmen oder Überzügen gehärtet. Für den Härtungsvorgang wird dabei sowohl die Radikalkettenpolymerisation als auch die Polykondensation ausgenutzt.

Die Herstellung von Überzügen durch Härten von auf Substrate aufgetragenen Schichten von Mischungen aus ungesättigten Polyestern und copolymerisierbaren Vinylmonomeren in Gegenwart von Photoinitiatoren und gegebenenfalls Beschleunigern durch UV-Strahlen ist seit langem bekannt. In der Regel sind nur pigmentfreie Schichten der UV-Härtung zugänglich. Durch deckende Pigmente wird die Wirkung der UV-Strahlen aufgehoben.

Es ist auch bekannt, Überzüge auf der Basis von ungesättigten Polyestern und Vinylmonomeren durch ionisierende Strahlen, insbesondere durch Elektronenstrahlen zu härten. Diese Methode hat den Vorteil gegenüber der UV-Härtung, daß auch Schichten aus ungesättigten Polyesterharzen und Vinylmonomeren, die deckend pigmentiert sind, in kurzer Zeit zu harten Überzügen gehärtet werden können. Außerdem ist die Anwesenheit von Photoinitiatoren nicht erforderlich.

Der Anwendung dieser Härtungsverfahren sind Grenzen gesetzt. So wirkt der Luftsauerstoff inhibierend auf die Polymerisation, das heißt, daß die Oberflächen klebrig bleiben. Um diesen negativen Effekt zu vermeiden, sind z.B. Zusätze von Paraffin oder Wachs zu dem zu härtenden Überzugsmittel erforderlich. Die Elektronenstrahlhärtung wird deshalb in der Regel in einer Inertgasatmosphäre ausgeführt. Außerdem ist bisher die vollständige Aushärtung von relativ dicken Schichten mittels Elektronenstrahlen nur dann möglich, wenn mit einer hohen Beschleunigungsspannung von mehr als 300 kV gearbeitet wird. Ein weiterer Nachteil der praxisüblichen polymerisierbaren Beschichtungsmaterialien ist es, daß die Haftung auf bestimmten Substraten zu wünschen übrig läßt. So treten beispielsweise bei der Oberflächenveredelung von Papier, das mit säurehärtbaren Harzen, wie Melaminharzen, Harnstoffharzen oder Phenolharzen getränkt ist, insbesondere bei Langzeiteinwirkung von Feuchtigkeit oder Wasserdampf Haftungsstörungen auf. Störend ist ferner die sogenannte "Schüsselneigung"; das ist die Verwölbung der mit ungesättigten Polyestermaterialien beschichteten Folien, was sich naturgemäß bei der Verarbeitung solcher Folien nachteilig auswirkt. Außerdem führt die durch die Elektronenstrahlhärtung bedingte Schrumpfung des Lackfilmes bei der Lackierung von furnierten Oberflächen häufig zu den als "Silberpore" bekannten Oberflächenstörungen.

In vielen Fällen tritt bei den bekannten und in der Praxis gebräuchlichen polymerisierbaren Lacken eine Penetration des Lackes bei saugfähigen Substraten auf, was zu einer unnötig hohen Auftragsmenge führt.

Mit Hilfe der ionisierenden Strahlung bzw. der Elektronenstrahlhärtung lassen sich mühelos hochglänzende bis seidenglänzende Überzüge herstellen mit einem Glanzgrad zwischen 100 und 50 Einheiten nach DIN 67530 bei einem Meßwinkel von 60 Grad. Dagegen bereitet die Herstellung von matten Oberflächen, die für viele Anwendungszwecke gefordert werden, außergewöhnliche Schwierigkeiten. Sie lassen sich auch mit den üblichen Methoden der Mattierung von Lacken durch den Einsatz von hochdispersen Siliciumdioxiden oder von Polyolefinpulver, Metallsalzen oder mineralischen Füllstoffen nicht überwinden. Je nach Untergrundbeschaffenheit kann man höchstens Werte bis herab zu 35 Einheiten nach DIN 67530 bei 60 Grad Meßwinkel erreichen. Stumpfmatte Oberflächen mit einem Glanzgrad gegen 0 Einheiten können dagegen nicht erhalten werden.

Es hat nicht an Versuchen gefehlt, diesen Nachteil strahlenhärtbarer Überzugsmittel zu überwinden. So hat man in der DE-AS 2 244 327 vorgeschlagen, matte Filme oder Überzüge nach einem zweistufigen Verfahren dadurch herzustellen, daß man Überzugsmittel auf Basis von ungesättigten Polyesterharzen zunächst in einer sauerstoffhaltigen Atmosphäre und anschließend in einer sauerstoffarmen Atmosphäre ionisierender Strahlung oder UV-Strahlung unterwirft. Dieses Verfahren erfordert jedoch sehr teure zweistufig arbeitende Elektronenstrahlanlagen oder bei der Kombination von Elektronenstrahlhärtung mit UV-Härtung oder bei der Anwendung von zweistufigen UV-Härtungsanlagen den Einsatz von Photoinitiatoren, die den Preis der Überzugsmittel deutlich erhöhen und die Lagerstabilität und die Handhabbarkeit negativ beeinflus-

0030285

sen.

Der vorliegenden Erfindung lag die Aufgabe zugrunde, Kunstharzsysteme zu schaffen, die unter Vermeidung der vorstehend aufgeführten Nachteile in Verbindung mit der ionisierenden Strahlung oder der UV-Strahlung verwendbar sind und hohe Verarbeitungsgeschwindigkeiten erlauben.

Diese Aufgabe wurde gelöst durch ein Verfahren zum Herstellen von Filmen oder Überzügen auf Basis von durch Strahlen härtbaren Kunstharzen, das dadurch gekennzeichnet ist, daß man Kunstharze mit polymerisierbaren C-C-Doppelbindungen, gegebenenfalls zusammen mit copolymerisierbaren Monomeren in Kombination mit Aminoplastharzen oder Phenoplastharzen und zusätzlich polykondensationsfähigen Verbindungen, gegebenenfalls mit Härtungsbeschleunigern und gegebenenfalls zusätzlich Lösungsmitteln, Pigmenten, Füllstoffen der aufeinanderfolgenden kombinierten Einwirkung von

ionisierenden Strahlen oder UV-Strahlen
und Wärmestrahlen oder Heißluft

unterwirft, bis der gesamte Film oder Überzug gehärtet ist.

0030285

In einer vorteilhaften und deshalb bevorzugten Ausführungsform beträgt der polymerisierbare Anteil,
bestehend aus Kunstharz mit C-C-Doppelbindungen und
gegebenenfalls copolymerisierbaren Monomeren, an der
Kombination von Kunstharzen mit C-C-Doppelbindungen,
gegebenenfalls copolymerisierbaren Monomeren, Aminoplastharzen bzw. Phenoplastharzen, polykondensationsfähigen Verbindungen, nicht weniger als 15 Gew.-%
und nicht mehr als 60 Gew.-%. Dementsprechend beträgt
der Anteil an Aminoplastharz bzw. Phenoplastharz und
polykondensationsfähigen Verbindungen an der Kombination zwischen 40 und 85 Gew.-%. Die Summe beider Anteile beträgt stets 100 Gew.-%.

Während für die Härtung des polymerisierbaren Anteiles der Kunstharzkombination mit ionisierenden Strahlen keine Härtungsbeschleuniger erforderlich sind,
werden für die UV-Strahlung Photoinitiatoren als Härtungsbeschleuniger benötigt. Aminoplastharze und
Phenoplastharze werden in der Regel durch die Einwirkung von Säuren oder säureabspaltenden Systemen
als Härtungsbeschleuniger bei Raumtemperatur oder
durch Wärme gehärtet. Bei Einbrennbedingungen durch
höhere Temperaturen kann die Säure auch fehlen.

Es war überraschend, daß sich das polymerisierbare
System kombiniert mit Aminoplastharz bzw. Phenoplast-

0030285

harz und anderen polykondensationsfähigen Verbindungen nicht gegenseitig in der Härtung behindert oder die technologischen Eigenschaften negativ beeinflußt. Erfindungsgemäß erfolgt die Härtung dem gemischten Aufbau des Harzsystems aus polymerisierbaren und polykondensationsfähigen Komponenten entsprechend durch die Kombination von ionisierenden Strahlen oder UV-Strahlen mit der Wärmestrahlung in Form von mittel- bis kurzwelligen Infrarotstrahlen oder von Mikrowellen oder in der einfachsten Form durch einfaches Erwärmen des zu härtenden Objektes oder durch Zufuhr von Heißluft, die vorzugsweise eine Temperatur von 150° C bis 250° C aufweist. Unter "ionisierenden Strahlen" im Sinne dieser Erfindung werden ionisierende elektromagnetische Strahlen verstanden einschließlich der Strahlung mit beschleunigten Elektronen von hoher Energie und der Röntgenstrahlen.

Es wurde ferner gefunden, daß die Wärmestrahlung sowohl vor als auch nach der Bestrahlung mit der ionisierenden Strahlung oder den UV-Strahlen erfolgen kann. Die ausgelösten Reaktionen (Polymerisation und Polykondensation) laufen nacheinander oder auch nebeneinander ab, ohne sich gegenseitig zu stören. Bei dem Einsatz von gemischt-funktionellen Harzen oder Monomeren, die sowohl der Polymerisation als auch der Polykondensation zugänglich sind, kann es auch zu

0030285

Quervernetzungen bei der Härtung kommen. In jedem Fall resultieren Überzüge oder Filme, die mit hoher Reaktionsgeschwindigkeit und niedriger Strahlendosis innerhalb kurzer Zeit aushärten.

So lassen sich zum Beispiel nach dem erfindungsgemäßen Verfahren, insbesondere der kombinierten Elektronenstrahl-Infrarothärtung, bei Bandgeschwindigkeiten von 5 bis 100 m/min nach 3 bis unter 1 Sekunde einwandfrei ausgehärtete Beschichtungen herstellen. Auf diese Weise können minutenlange Hitzebehandlungen, wie sie bisher üblich waren, z.B. 10 Minuten bei 200° C oder 3 Minuten bei 290° C, extrem verkürzt werden, was zu wesentlich platzsparenden Härtungsanlagen und zu bemerkenswerten Einsparungen an Energie führt.

Die bevorzugte ionisierende Strahlung ist die Bestrahlung mit beschleunigten Elektronen von hoher Energie. Als Strahlungsquellen werden die handelsüblichen Geräte verwendet. Sie arbeiten meist mit Beschleunigungsspannungen zwischen 150 und 500 kV.

Als Strahlungsquellen für die UV-Strahlung lassen sich die bekannten auf dem Markt befindlichen Quecksilberdampf-Hochdruckstrahler, Quecksilberdampf-Niederdruckstrahler oder aktinische Leuchtstofflampen einsetzen.

Für die Wärmestrahlung werden mittel- bis kurzwellige Infrarotstrahlen bevorzugt verwendet. Geeignet sind auch Mikrowellen oder durch Hochfrequenz im Überzug erzeugte iduktive Wärme.

Gegenüber den Beschichtungen auf Basis von ungesättigten Polyesterharzen, die nur durch Elektronenstrahlen oder UV-Strahlen gehärtet werden, werden nach dem erfindungsgemäßen Verfahren beachtliche Vorteile erhalten. So ist die Filmschrumpfung geringer und die Haftung verbessert.
Außerdem lassen sich überraschenderweise im Gegensatz zu den bekannten strahlenhärtbaren Beschichtungsstoffen nunmehr auch sehr leicht und wirksam mattierte Oberflächen erzielen. Es ist nahezu jeder beliebige Mattgrad bzw. Glanzgrad einstellbar; also auch solche Glanzgrade unterhalb von 35 Einheiten nach DIN 67530 gemessen bei einem Winkel von 60 Grad bis zu 0 Einheiten entsprechend einer stumpfmatten Oberfläche, die bisher nicht erhalten werden konnten, lassen sich mühelos unter gleichzeitiger Beibehaltung der guten technologischen Oberflächeneigenschaften erzielen.

Überraschend war es weiter, daß nach dem erfindungsgemäßen Verfahren in normaler sauerstoffhaltiger Atmosphäre gearbeitet werden kann. Die inhibierende Wirkung des Luftsauerstoffs ist erheblich herabgemindert und auch die Verwendung von Inertgas ist nicht unbedingt erforderlich.

Ein weiterer Gegenstand der Erfindung ist das zur Durchführung des erfindungsgemäßen Verfahrens verwendete Überzugsgemisch. Es zeichnet sich dadurch aus, daß es Kunstharze mit polymerisierbaren C-C-Doppelbindungen, gegebenenfalls zusammen mit copolymerisierbaren Monomeren in Kombination mit Aminoplastharzen oder Phenoplastharzen und zusätzlich polykondensationsfähigen Verbindungen, gegebenenfalls mit Härtungsbeschleunigern und gegebenenfalls zusätzlich Lösungsmitteln, Pigmenten, Füllstoffen enthält.

Bei einem vorteilhaften und deshalb besonders bevorzugten Überzugsgemisch beträgt der polymerisierbare Anteil, bestehend aus Kunstharz mit C-C-Doppelbindung und gegebenenfalls copolymerisierbaren Monomeren, an der Kombination von Kunstharzen mit C-C-Doppelbindungen, gegebenenfalls copolymerisierbaren Monomeren, Aminoplasten bzw. Phenoplasten und polykondensationsfähigen Verbindungen nicht weniger als 15 Gew.-% und nicht mehr als 60 Gew.-%. Dementsprechend beträgt der Anteil an Aminoplastharz bzw. Phenoplastharz und polykondensationsfähigen Verbindungen in der Kombination zwischen 40 und 85 Gew.-%. Die Summe beider Anteile

0030285

beträgt stets 100 Gew.-%.

Zu den einzelnen Komponenten des Überzugsgemisches ist folgendes zu sagen:

Zu den Kunstharzen mit polymerisierbaren C-C-Doppelbindungen, die im Rahmen dieser Erfindung geeignet sind, gehören ungesättigte Polyesterharze, Polyester-acrylate, Ätheracrylate, Epoxidacrylate, Urethan-acrylate und ungesättigte Acrylatharze. Diese Stoffe sind sämtlich bekannt und handelsüblich. (Vgl. Fatipec 1976, Seiten 244 - 249).

So werden unter ungesättigten Polyesterharzen die üblichen Polykondensationsprodukte aus mehrwertigen, insbesondere zweiwertigen Carbonsäuren, die mit mehr-wertigen, insbesondere zweiwertigen Alkoholen ester-artig verknüpft sind, verstanden und die gegebenenfalls zusätzliche Reste einwertiger Carbonsäuren und/oder Reste einwertiger Alkohole und/oder Reste von Hydroxycarbonsäuren enthalten, wobei zumindest 1 Teil der Reste über äthylenisch ungesättigte copolymerisierbare Gruppen verfügen muß. Diese ungesättigten Polyester werden üblicherweise durch Schmelzkondensation oder Kondensation unter azeotropen Bedingungen aus ihren Komponenten hergestellt.

Bei den Polyesteracrylaten handelt es sich in der Regel um Polyester, deren freie Hydroxylgruppen mindestens teilweise mit Acrylsäure oder Methacrylsäure verestert sind.

Epoxidacrylate sind Umsetzungsprodukte von Epoxidharzen mit mindestens 2 Epoxidgruppen mit Acrylsäure oder Methacrylsäure unter Bildung von Epoxidestern.

Unter Urethanacrylaten werden Umsetzungsprodukte von Hydroxyalkylacrylaten mit Verbindungen mit freien Isocyanatgruppen verstanden.

Ätheracrylate sind mit Acrylsäure bzw. Methacrylsäure veresterte Polyätherpolyole.

Unter ungesättigten Acrylatharzen werden Copolymere verstanden aus Acrylsäureestern, Methacrylsäureestern, Styrol und anderen Comonomeren, die in der Seitenkette über eine copolymerisierbare C-C-Doppelbindung verfügen.

Die Kunstharze mit copolymerisierbaren C-C-Doppelbindungen können einzeln oder im Gemisch zu mehreren enthalten sein.

Das erfindungsgemäße Überzugsmittel enthält neben den

0030285

Kunstharzen mit copolymerisierbaren C-C-Doppelbindungen gegebenenfalls copolymerisierbare Monomere.

Ein Vorteil des beanspruchten Verfahrens liegt darin,
daß die Härtung eines Filmes oder Überzuges unter
Verwendung des erfindungsgemäßen Überzugsgemisches
möglich ist, ohne daß das Überzugsgemisch Monomere
enthält. Sind aber copolymerisierbare olefinisch
ungesättigte monomere Verbindungen anwesend, so kann
das Verhältnis zwischen den Kunstharzen mit copolymerisierbaren C-C-Doppelbindungen und den Monomeren
in weiten Bereichen verändert werden.

Vorteilhafte Überzüge werden erhalten bei einem
bevorzugt angewandten Mischungsverhältnis von
40 bis 60 Gew.-% Kunstharz mit copolymerisierbaren
C-C-Doppelbindungen und 60 bis 40 Gew.-% monomerer
Verbindungen (die Summe soll 100 Gew.-% betragen).

Im Rahmen des erfindungsgemäßen Verfahrens sind
sämtliche bekannten und handelsüblichen copolymerisierbaren Monomere geeignet. Als Beispiel
werden vorgeschlagen:

Ester der Acrylsäure oder Methacrylsäure mit ein-
oder mehrwertigen, insbesondere zweiwertigen geradkettigen, verzweigten oder cyclischen Alkoholen mit

- 14 -                                    0030285

1 bis 18 Kohlenstoffatomen:

z.B. Acrylsäure-methyl-, äthyl-, propyl-, isopropyl-,
-n-butyl-, isobutyl-, -tert.-butyl-, hexyl-, cyclohexyl-, nonyl-, decyl-, isodecyl-, dodecyl- und
octadecylester,
Methacrylsäure-methyl-, butyl- und isobutylester,
Glykoldiacrylat, Glykoldimethycrylat, 1.2- und
1.3-Propandiol-diacrylat, Butandiol-1.3- und 1.4-diacrylat, Hexandiol- 1.6-diacrylat, Diäthylenglykoldiacrylat, Tri- und Tetraäthylenglykol-diacrylat,
Di- und Tripropylenglykoldiacrylat, Neopentylglykoldiacrylat, Trimenthylolpropan-di- und -triacrylat.
Pentaerythrit-di-, -tri- und -tetraacrylat sowie
die jeweils entsprechenden Methacrylate und die
Monoester der genannten mehrwertigen Alkohole, wie
Propylenglykolmonoacrylat, Butandiol-monoacrylat u.a.

Neben den Estern der Acrylsäure und Methacrylsäure
eignen sich als weitere Monomeren die Mono- und
Dialkylester der Malein- und Fumarsäure, wie z.B.
Maleinsäure-monoäthylester, Maleinsäure-dibutylester,
Fumarsäure-monomethylester und Fumarsäure-dibutylester, Acrylamid-Derivate wie N-Methylolacrylamid,
N-Methylolactylamid-n-butyläther, Diacetonacrylamid
sowie die entsprechenden Methacrylamid-Derivate,
Vinylheterocyclen, wie z.B. Vinylpyridin, N-Vinyl-

0030285

pyrrolidon, N-Vinylcaprolactam und Vinylaromaten wie z.B. Styrol, alpha-Methylstyrol, Vinyltoluol, Divinylbenzol.

Das erfindungsgemäße Überzugsgemisch enthält ferner Aminoplastharze oder Phenoplastharze und polykondensationsfähige Verbindungen.

Als Aminoplastharze bildende Verbindungen kommen Harnstoffe und seine Substitutionsprodukte, ferner Aminotriazine, die mindestens zwei Aminogruppen enthalten, wie Melamin, Ammelin, sowie Thioammelin und Benzoguanamin zur Anwendung. Der gebräuchlichste Aldehyd ist Formaldehyd.

Die mit diesem hergestellten Kondensationsprodukte werden in üblicher Weise unter Abspaltung von Wasser, Entfernen des Wassers aus dem Reaktionsgemisch und Verätherung mit einem einwertigen und/oder mehrwertigen Alkohol mit mindestens einer funktionellen Gruppe hergestellt. Geeignete Alkohole sind beispielsweise Methanol, Äthanol, Propanol, Isopropanol, Butanol, Sekundär-Butanol, Isobutanol, Allylalkohol, Glykol, Diglykol, Polyglykol, Glycerin, Pentaerythrit, Sorbit, Mannit. Es hat sich herausgestellt, daß im Rahmen der vorliegenden Erfindung ganz besonders der Verätherung des Hexamethylolmelamins mit den einwertigen Alkoholen der Vorzug zu geben ist. Besonders bevorzugt und die besten Ergebnisse liefernd wird das Hexamethoxy-methylmelamin vorgeschlagen. Die verätherten Aminoplastharze sind in Alkoholen leicht löslich und es lassen sich aus diesen Lösungen stabile wäßrige Emulsionen herstellen. Einige Aminoplastharze, insbesondere die Methyläther, bilden auch in Wasser Lösungen.

Unter Phenoplastharze werden Kondensationsprodukte aus Phenol und dessen Homologen, wie Kresole, Xylenole sowie Alkylphenolen, wie z.B. p-tertiär-Butylphenol, einerseits und Formaldehyd andererseits verstanden. Sie sind in Alkohol oder Toluol löslich und es lassen sich aus diesen Lösungen wäßrige Emulsionen herstellen. -

Das erfindungsgemäße Überzugsgemisch enthält ferner polykondensationsfähige Verbindungen. Diese sind den Gruppen der niedermolekularen Polyesterharze bzw. der Alkydharz und der polyvalenten Alkohole zuzuordnen.

Niedrigmolekulare Polyesterharze mit Molekulargewichten von 200 bis 6000, bzw. Alkydharze können sowohl linear als auch verzweigtkettig sein. Die Herstellung erfolgt in üblicher Weise durch Umsetzen von Dicarbonsäuren, wie z.B. Phthalsäure, Isophthalsäure, Hexahydroterephthalsäure, Tetrahydrophthalsäure, Bernsteinsäure, Glutarsäure, Adipinsäure oder Sebacinsäure mit Alkoholen, die zwei oder mehr Hydroxylgruppen tragen, wie beispielsweise Äthylenglykol, Diäthylenglykol, Propylenglykol, Butylenglykol, Trimethylolpropan. Glycerin, Pentaerythrit, Sorbit und vielen anderen Verbindungen, die über die vorhandenen alkoholischen Hydroxylgruppen mit Dicarbonsäuren verestert werden können. Sie können ferner mit Monocarbonsäuren modifiziert sein, wie Leinölfettsäure, Rizinusölfettsäure, dehydsatisierte Rizinusölfettsäure, Kokosnußölfettsäure, Vorlauffettsäure, Octancarbonsäure. Säuren und Alkohole können allein oder in Mischung verwendet werden. Das Molekulargewicht läßt sich in einfacher Weise über das Mengenverhältnis von Polyol und Dicarbonsäure regulieren.

Die niedrigmolekularen Polyesterharze sollen außerdem Hydroxylzahlen bis zu 450 aufweisen. Um dies zu erreichen, wird bei der Herstellung ein Überschuß an alkoholischer Komponente angewendet, so daß Produkte entstehen, die Hydroxylendgruppen tragen. Die technische Herstellung wird in bekannter Weise durch Verestern der Komponenten bei höheren Temperaturen unter Abführung des entstehenden Reaktionswassers vorgenommen. Die so gewonnenen Polyhydroxylverbindungen können mit Äthylenoxid oder Propylenoxid umgesetzt werden, so daß man teilweise verätherte Produkte erhält.

Die niedrigmolekularen Polyesterharze können auch Urethangruppen enthalten, die durch Umsetzen mit isocyanatgruppenhaltigen Verbindungen in bekannter Weise erhalten werden. Auch Kondensationsprodukte, die man erhält, indem man Äthylenoxid oder Propylenoxid mit Äthylendiamin oder Äthanolamin umsetzt, können für die Polyesterherstellung verwendet werden.

Außerdem sind anwendbar epoxydierte Öle, Rizinusöl, Tallöl und andere hydroxylgruppenhaltige Produkte. Alle vorgenannten Polyestertypen können allein oder in Mischungen angewendet werden. Die geeigneten Polyesterharze sind in der Regel flüssig oder zumindest vorwiegend niedrigviskos.

Zu den geeigneten polykondensationsfähigen Verbindungen gehören auch polyvalente Alkohole mit mindestens zwei primären und/oder sekundären Hydroxylgruppen.

Beispiele für geeignete Alkohole sind Äthylenglykol, Propylenglykol, Butylenglykol, Äthylendiglykol, Äthylentriglykol, Äthylentetraglykol, Glycerin, Sorbit, Monoester des Glycerins mit einwertigen Fettsäuren, Butandil-1,4, Hexandiol-1,6, Dodekanol-1,12.

Zum richtigen Einstellen der zweckmäßigen Verarbeitungskonsistenz kann das Überzugsgemisch noch mit Wasser oder anderen üblichen Verdünnungsmitteln, wie Alkohole, Glykole, Glykolester, Glykoläther und anderen Lösungsmitteln weiterverdünnt werden.

Falls es die technologischen Eigenschaften des Filmes hinsichtlich seiner Elastizität verlangen, können noch zusätzlich die üblichen Weichmachungsmittel, wie Ester der Phthalsäure, z.B. Dimethylphthalat, Diäthylphthalat, Dihexylphthalat, Dioctylphthalat und andere Weichmacher, die mit dem Überzugsgemisch verträglich sind, verwendet werden.

Auch Füllstoffe können, falls notwendig, zugesetzt werden, z.B. Kieselsäure, Silikate, Bariumsulfat, Talkum, Kaolin, hochdisperse Kieselsäure, Korkmehl. Um den Überzug oder Film einzufärben, kann das flüssige Überzugsgemisch auch die üblichen farbgebenden Substanzen oder Pigmente enthalten.
Zusatz- und Hilfsstoffe, wie Verlaufsmittel, Antischaummittel, Absetzverhinderungsmittel, Thioxotropiermittel sind ebenfalls anwendbar.

Bei der Pigmentierung sind jedoch Einschränkungen zu beachten aufgrund mangelnder UV-Transparenz bei dicken Schichten, wenn die Überzugsmittel unter UV-Licht gehärtet werden sollen.

Obwohl die Härtung ohne Zusatz von Härtungsbeschleunigern bewirkt werden kann, ist es in vielen Fällen zweckmäßig, den Härtungsprozess durch die Anwesenheit von Härtungsbeschleunigern in dem Überzugsgemisch zu unterstützen. Die hier geeigneten Härtungsbeschleuniger werden in zwei Gruppen eingeteilt, je nachdem sie den Polymerisationsvorgang oder den Polykondensationsvorgang beschleunigen oder aktivieren.

Härtungsbeschleuniger für den Polykondensationsvorgang sind saure Katalysatoren, die den Härtungsprozess bei reduzierten Temperaturen ermöglichen. Hierzu gehören Salzsäure, Phosphorsäure in wäßriger oder alkoholischer Lösung, Phosphorsäuremonoalkylester, p-Toluolsulfonsäure. Obwohl auch andere Säuren als Härter verwendet werden können, liefert die p-Toluolsulfonsäure die besten Resultate. Da die Säuren die Topfzeit des Überzugsgemisches stark herabsetzen, werden sie in der Regel dem Überzugsgemisch erst kurz vor der Applikation zugesetzt. Für lagerstabile Einkomponentensysteme eignen sich "verkappte" Säuren. Es sind dies Verbindungen, die bei erhöhter Temperatur einer Aufspaltung unter Freisetzung der entsprechenden Säuren unterliegen, z.B. das Morpholinsalz der p-Toluolsulfonsäure oder Veresterungsprodukte von p-Toluolsulfonsäure mit Epoxidharzen wie sie aus der DE-AS 2 345 114 bekannt sind. Die übliche Zusatzmenge beträgt zwischen 6 und 20 Gew.-%, bezogen auf die Menge an Aminoplastharz bzw. Phenoplastharz.

Härtungsbeschleuniger für den Polymerisationsvorgang sind die allgemein bekannten Photoinitiatoren. Sie sind erforderlich bei der durch UV-Strahlung bewirkten Härtung.

Geeignete Photoinitiatoren gehören zu den folgenden Stoffklassen:

Benzophenon und Derivate, z.B. "Michlers Keton", Benzoin und Derivate, insbesondere seine Äther, z.B. Benzoin-methyläther, Benzoin-äthyläther, Benzoin-isopropyläther, Benzoin-butyläther, Benzil und Derivate, insbesondere seine Dialkylketale, z.B. Benzildimethylketal, Acetophenon und Derivate, z.B. Diäthoxyacetophenon, 3-tert-Butyl--2', 2', 2'-trichloracetophenon, Thioxanthon und Derivate, z.B. 2-Methyl-thioxanthon, 2-Chlor--thioxanthon,

Anthrachinon und Derivate, z.B. 2-Äthyl-anthrachinon, 2-Chlor-anthrachinon.

Die üblichen Zusatzmengen betragen zwischen 0,1 und 10 Gew.-%, bevorzugt 1 bis 5 Gew.-%, bezogen auf den polymerisierbaren Anteil.

Einige Photoinitiatoren, z.B. Benzophenon oder Thioxanthon und deren Derivate entfalten ihre volle Wirkung erst bei Zugabe von Synergisten, allgemein organische Verbindungen mit nichtaciden aktiven Wasserstoffatomen, wie z.B. Alkohole und/oder Amine,

z.B. Trialkylamine, z.B. Triäthylamin, Dialkyl-monohydroxyalkyl-amine, z.B. Dimethyl-äthanolamin,
Monoalkyl-di-(hydroxyalkyl)-amine, z.B. Monoäthyl-di(hydroxyäthyl)-amin,
Tri(hydroxyalkyl)-amine, z.B. Triäthanolamin

Die üblichen Zusatzmengen betragen ebenfalls 0,1 bis 10 Gew.-%, bevorzugt 1 bis 5 Gew.-%.

Die Herstellung des Überzugsgemisches erfolgt in üblicher Weise durch Vermischen der Komponenten. Mitunter ist es angezeigt, eine Komponente, falls sie in nichtflüssiger Form vorliegt, zunächst in einem Lösungsmittel zu lösen und diese Lösung mit den übrigen Komponenten zu vermischen. Die p-Toluolsulfonsäure wird dem Überzugsgemisch in der Regel vor der Verarbeitung zugesetzt. Um eine möglichst gleichmäßige Verteilung in dem Überzugsgemisch zu erreichen, wird die p-Toluolsulfonsäure in der Regel als Lösung in Wasser oder in einem organischen Lösungsmittel verwendet. Üblich sind 10 bis 40 %ige Lösungen, die unter gutem Rühren in das Überzugsgemisch eingemischt werden.

Pigmente und Füllstoffe werden mit Hilfe der in der Lackindustrie bekannten Dispergiermethoden mittels Dissolver, Kugelmühle, Sandmühle oder Dreiwalze eingearbeitet.

Die erfindungsgemäßen Überzugsgemische sind mit organischen Lösungsmitteln verdünnbar. Da die polykondensationsfähige Komponente des Überzugsgemisches in der Regel aus wasserlöslichen oder wassermischbaren Produkten besteht und die besondere Eigenschaft besitzt, für die polymerisationsfähige Komponente und die Monomeren die Funktion eines Dispergiermediums zu übernehmen, so ist das Überzugsgemisch in vielen Fällen, gegebenenfalls unter Mitwirkung von wasserlöslichen Lösungsmitteln, mit Wasser verdünnbar. Dies hat den Vorteil, daß die Maschinen mit Wasser gereinigt werden können.

Je nach Rezeptierung lassen sich die Überzugsgemische als Spachtel, Grundierungen, Füller, Lacke oder Imprägnierungsmittel einsetzen. Bei Applikation auf einer Trennfolie gelingt auch die Herstellung freier Filme.

Das Überzugsgemisch wird mit den in der Lackindustrie üblichen Methoden des Spritzens, Streichens, Tauchens, Gießens, Walzens auf die zu beschichtenden Flächen aufgebracht. Es wird verwendet zur Veredelung von Papieroberflächen und zur Beschichtung von glatten und porösen Substraten, wie Holzwerkstoffe, Holz, Papier, Pappe, Kunststoffe, Glas, mineralische und keramische Werkstoffe und Metalle.

Das erfindungsgemäße Verfahren ist besonders für das Beschichten oder Überziehen von üblichen Substraten geeignet. Das Substrat wird mit dem Überzugsgemisch beschichtet und dann werden die Filme oder Überzüge, wie in den Patentansprüchen angegeben, gehärtet.

Werden nicht gehärtete oder höchstens vorgelierte, mit Tränkharzen imprägnierte, gewebte oder ungewebte Trägermaterialien aus Papier, Vlies oder Gewebe einseitig mit dem flüssigen Überzugsgemisch beschichtet, so kann dieses Trägermaterial die oberste Schicht eines Stapels aus mehreren, in gleicher Weise mit Tränkharzen imprägnierter anderer Trägermaterialien sein. Durch Anwendung von Druck und Wärme findet hierbei in einem Arbeitsgang sowohl die Herstellung eines Schichtpreßstoffes als auch die Vorhärtung des aufgebrachten Überzugsgemisches statt, worauf dann die Aushärtung durch die weitere Bestrahlung mit ionisierenden Strahlen oder UV-Strahlen erfolgt. Man erhält einen mit dem Schichtpreßstoff fest verankerten Überzug. Die zur Imprägnierung der vorstehend bezeichneten Trägermaterialien dienenden Tränkharze sind bekanntlich wäßrige oder alkoholische Lösungen von Phenol-, Harnstoff- oder Melaminharzen oder auch von Mischkondensationsprodukten aus Harnstoff- und Melaminharzen.

Bei den für die Imprägnierung verwendeten Papieren handelt es sich durchweg um geeignete Natronkraft- oder Zellstoffpapiere. Um Dekorplatten herzustellen, deren Oberfläche bunte, helle oder dekorative Muster aufweisen sollen, wird ein imprägniertes Dekorpapier, gefärbtes oder farbig bedrucktes oder mit einem Holzmasermuster bedrucktes Zellstoffpapier verwendet.

In einer anderen möglichen Arbeitsweise werden die mit den üblichen Tränkharzen imprägnierten Trägermaterialien nach dem Abquetschen des Überschusses

zunächst durch einen Trockenkanàl geführt, der bei 100 bis 120° C eine Vorgelierung der Tränkharze bewirkt. Danach wird entweder unmittelbar mit dem erfindungsgemäß verwendeten flüssigen Überzugsgemisch beschichtet oder aber es wird zunächst eine Zwischenschicht durch Aufbringen einer Polyvinylacetat- oder Polyacrylat-Dispersion hergestellt. Auf eine solche Zwischenschicht wird dann mit dem erfindungsgemäß verwendeten flüssigen Überzugsgemisch weiter beschichtet und ausgehärtet.

Die nach dem erfindungsgemäßen Verfahren hergestellten Überzüge zeichnen sich durch hervorragende technologische Eigenschaften aus. Sie sind hart und ausgezeichnet vergilbungsbeständig. Der Glanzgrad kann zwischen hochglänzend und stumpfmatt liegen. Sie sind ferner beständig gegenüber organischen Lösungsmitteln, wie Xylol, Mischungen aus aliphatischen Kohlenwasserstoffen und Benzol, Estern und Ketonen. Darüberhinaus weisen sie eine ausgezeichnete Säure- und Alkalibeständigkeit auf. Bei Salzsprühversuchen Tropentests und Prüfungen im Weatherometer zeigen die Überzüge keine nennenswerte Beeinträchtigung ihrer technologischen Eigenschaften. Pigmentierte Überzüge besitzen einen positiven "Ringtest", d.h. wenn ein Metallteil über den Überzug gezogen wird, hinterläßt dieses keine Verfärbung in der Oberfläche.

Die nachfolgenden Beispiele sollen die Erfindung erläutern, ohne sie einzuschränken. Angegebene Teile sind Gewichtsteile, Prozente sind Gewichtsprozente, falls nicht ausdrücklich anders angegeben.

Beispiel 1

30 Teile    einer 60 %igen Lösung eines ungesättigten Polyesterharzes aus 2,7 Mol Propandiol-1,2, 1,0 Mol Phthalsäureanhydrid und 1,4 Mol Maleinsäureanhydrid mit einer Säurezahl von etwa 30 in Butandiol-1,4-diacrylat,

20 Teile    Diäthylenglykoldiacrylat,

40 Teile    einer 80 %igen Lösung eines Melaminharzes in Wasser und

10 Teile    eines Polyesterharzes aus 1 Mol Phthalsäureanhydrid und 1,5 Mol Äthylenglykol mit einem Hydroxylgehalt von ca. 8,5 % und einer Viskosität von 330 $\pm$ 30 Centipoise und einer Dichte bei 20° C nach DIN 51757 von ca. 1,3

werden bei Raumtemperatur zu einem dünnflüssigen Stammlack A innig vermischt.

Das Melaminharz ist ein weitgehend mit Methanol veräthertes Hexamethylolmelamin,das durch Reaktion von
1 Teil trockenem Hexamethylolmelamin mit 5 Teilen
Methylalkohol und 0,3 Teilen Salzsäure erhalten wurde.
Die klare Lösung wurde nach 8 bis 10 Minuten neutralisiert und nach dem Abdampfen des überschüssigen
Alkohols der Melamin-Hexamethylol-Methyläther in
Kristallen erhalten. Diese werden zu einer 80 %igen
Lösung in Wasser gelöst.

90 Teile des Stammlackes A werden mit 10 Teilen einer 40 %igen Lösung von p-Toluolsulfonsäure in Wasser gemischt und gleichmäßig homogenisiert. Diese
Überzugsmischung wird mit Hilfe eines Drahtrakels
in einer Menge von ca. 30 g/m² auf eine Hartfaserplatte aufgezogen und anschließend in einer Elektronenstrahlanlage mit beschleunigten Elektronen von
150 kV (Kilovolt) Spannung, 5 Milliampere (mA)
Stromstärke bei einer Bandgeschwindigkeit von
25 m/min unter Anwendung von Stickstoff als Inertgas
bestrahlt. Die bestrahlte Schicht wird dann anschliessend sofort 4 Sekunden lang mit einem Infrarotstrahler aus 3 cm Abstand bestrahlt. Man erhält einen harten, kratzfesten, guthaftenden Lackfilm mit glänzender Oberfläche, der bei Verformung zähelastisch ist.
Der Lackfilm ist ferner lösungsmittelbeständig gegen
Äthylacetat und Aceton, ferner beständig gegen Flecke mit Stempelfarbe und Kaffee.

Der Stammlack A ist nach der Zugabe der p-Toluolsulfonsäure flüssig und verarbeitungsfertig, er kann aber auch in begrenztem Umfang mit Wasser auf eine andere Verarbeitungsviskosität eingestellt werden. Die Verarbeitungsmaschinen können mit Wasser gewaschen werden.

Beispiel 2

Das Beispiel 1 wird wiederholt mit dem Unterschied, daß die auf die Hartfaserplatte aufgebrachte Überzugsmischung zuerst 4 Sekunden lang mit einem Infrarotstrahler aus 3 cm Abstand bestrahlt wird und anschließend sofort der Elektronenstrahlanlage zugeführt wird und unter den in Beispiel 1 beschriebenen Bedingungen bestrahlt wird.

Es resultiert ein Lackfilm, der dieselben Eigenschaften wie der nach Beispiel 1 erhaltene Film aufweist.

Beispiel 2 beweist, daß die Reihenfolge der Anwendung von Wärmestrahlung und Elektronenstrahlung beliebig gewählt werden kann.

In den Beispielen 1 und 2 wird eine Elektronenstrahlanlage mit einer Spannung von 150 kV und 5 mA Stromstärke und eine Bandgeschwindigkeit von 25 m/min benutzt. Diese Werte können auch geändert werden, wenn andere Elektronenstrahlanlagen verwendet werden. Es sind Spannungen zwischen unter 100 kV (im Vakuum) und 5000 kV möglich, jedoch sind 150 kV bis 500 kV üblich und bevorzugt; die Stromstärken betragen je nach Anlage zwischen 1 und 200 mA, wobei 50 bis 150 mA je m Breite bevorzugt werden. Je nach Ausführung und Leistung der Elektronenstrahlanlage betragen die Bandgeschwindigkeiten zwischen 5 und 150 m/min.

Beispiel 3

Die Beispiele 1 und 2 werden wiederholt mit dem Unterschied, daß anstelle der Wärmeeinwirkung durch einen Infrarotstrahler Heißluft von 150° C 30 Sekunden aus einem Düsentrockner auf die beschichtete Oberfläche einwirkt. Man erhält Überzüge mit analogen Eigenschaften, wie in den Beispielen 1 und 2.

Beispiel 4

Die Beispiele 1 und 2 werden wiederholt mit dem Unterschied, daß anstelle der Wärmeeinwirkung mittels eines Infrarotstrahlers die beschichtete Oberfläche 10 Sekunden mit Mikrowellen bestrahlt wird. Man erhält Überzüge, mit analogen Eigenschaften, wie in den Beispielen 1 und 2.

Beispiel 5

Die Beispiele 1 und 2 werden wiederholt  mit dem Unterschied, daß die Überzugsmischung auf ein 0,7 mm dickes Stahlblech aufgerakelt wird und anstelle der Wärmeeinwirkung durch einen Infrarotstrahler das beschichtete Blech 20 Sekunden lang induktiv auf 180° C Objekttemperatur erhitzt wird. Man erhält dann Überzüge, entsprechend denen der Beispiele 1 und 2.

Beispiel 6

Zu 81 Teilen des nach Beispiel 1 erhaltenen Stammlackes A werden 10 Teile hochdisperses Siliciumdioxid (pyrogene Kieselsäure) zugegeben und mittels eines Dissolvers innig vermischt. Zu dieser Mischung werden 9 Teile einer 40 %igen wäßrigen Lösung von p-Toluolsulfonsäure hinzugefügt, diese verarbeitungsfähige Überzugsmischung wird,wie in Beispiel 1 beschrieben, weiterverarbeitet und gehärtet. Es resultiert ein Film mit denselben Eigenschaften, wie in Beispiel 1, der jedoch eine matte Oberfläche aufweist. Der Glanzgrad der Oberfläche liegt bei ca. 20 Einheiten nach DIN 67530, gemessen bei einem Meßwinkel von 60 Grad.

Beispiel 7

Beispiel 6 wird wiederholt  nur mit dem Unterschied,
daß die Härtung, wie in Beispiel 2 beschrieben, erfolgt.

Der resultierende Lackfilm zeigt die gleichen Eigenschaften, wie der nach Beispiel 6 erhaltene.

Beispiel 8 (Vergleichsbeispiel)

Das Beispiel 1 wird wiederholt  mit dem Unterschied,
daß der auf eine Spanplatte aufgebrachte Film nicht
durch eine Elektronenstrahlanlage geschickt wird,
sondern nur mit einem Infrarotstrahler aus 3 cm Abstand bestrahlt wird.

Man erhält einen trockenen Film, dessen polymerisierbarer Anteil jedoch noch weitgehend unreagiert
vorliegt und der in der Lösungsmittel- und Chemikalienbeständigkeit weit hinter den Eigenschaften
des nach Beispiel 1 erhaltenen Lackfilmes zurückbleibt. Für eine praktische Verwertbarkeit reicht
die Gebrauchstüchtigkeit einer so beschichteten
Fläche nicht aus.

## Beispiel 9 (Vergleichsbeispiel)

Beispiel 1 wird wiederholt mit dem Unterschied, daß das flüssige Überzugsgemisch, nachdem es auf eine Spanplatte aufgebracht wurde, nur mit Hilfe der Elektronenstrahlen gehärtet wird und die Infrarotstrahlung entfällt.

Man erhält einen gehärteten Lackfilm, der an der Oberfläche kratzempfindlich geblieben ist und dessen Gebrauchstüchtigkeit für viele technische Zwecke ungenügend ist.

## Beispiel 10 (Vergleichsbeispiel)

Als Vergleichsversuch zu Beispiel 6 wird eine Lackmischung aus 48 Teilen der in Beispiel 1 näher bezeichneten ungesättigten Polyesterharzlösung mit 13 Teilen des in Beispiel 6 verwendeten hochdispersen Siliciumdioxids im Dissolver dispergiert und anschließend diese Mischung mit 39 Teilen Diäthylenglykoldiacrylat verdünnt.

Es handelt sich um eine rein polymerisierbare Mischung, die nach dem Aufbringen auf eine Spanplatte unter den in Beispiel 1 angegebenen Bedingungen und unter Stickstoff als Inertgas mit Elektronenstrahlen gehärtet wird.

Man erhält einen harten, klebfreien und kratzfesten Überzug, dessen Oberfläche einen Glanz von 45 Einheiten nach DIN 67530 gemessen bei einem Winkel von 60 Grad aufweist.

Dieser Glanz ist im Vergleich zu dem Glanzgrad des Beispiels 6 wesentlich höher und für viele Zwecke der Oberflächenbeschichtung zu hoch. Er läßt sich auch durch eine weitere Erhöhung des Anteiles an Mattierungsmitteln nicht wesentlich senken. Der in Beispiel 6 angegebene Wert für den Glanzgrad kann nicht erreicht werden.

Beispiel 11

Beispiel 6 wird wiederholt mit dem Unterschied, daß die Elektronenstrahlhärtung ohne Anwendung von Inertgas unter Luft durchgeführt wird. Der resultierende Lackfilm zeigt analoge Eigenschaften, wie der in Beispiel 1 erhaltene, jedoch ist der Mattgrad gegenüber dem Beispiel 6 noch weiter gesenkt bis auf unter 10 Einheiten nach DIN 67530 bei 60 Grad Meßwinkel.

Die Wiederholung dieses Beispieles nur mit dem Unterschied, daß zuerst die Infrarotbestrahlung erfolgt und daran anschließend die Elektronenbestrahlung, liefert dasselbe Ergebnis im Glanzgrad.

Beispiel 12

81 Teile des nach Beispiel 1 erhaltenen Stammlackes
A werden mit 10.Teilen hochdispersem Siliciumdioxid
in einem Dissolver gleichmäßig dispergiert. Dieser
Mischung werden 9 Teile einer 60 %igen wäßrigen Lösung des Morpholin-Salzes der p-Toluolsulfonsäure
zugesetzt. Das Gemisch ist verarbeitungsfertig und
wird, wie in Beispiel 1 beschrieben, auf eine Spanplatte aufgebracht und gemäß dem Beispiel 1 weiterverarbeitet und gehärtet.

Es resultiert ein Film mit einem Glanzgrad von ca.
20 Einheiten nach DIN 67530  bei60 Grad Meßwinkel.

Die den Härter enthaltende Mischung hat eine Lagerbeständigkeit bei Raumtemperatur von mindestens
2 Monaten.

Beispiel 13

A.   345 Teile eines Polyesters aus Addipinsäure
     Phthalsäure, Trimethylolpropan und Äthylenglykol
     mit einer OH-Zahl von 325,
     250 Teile Cyclohexan,
     1,5 Teile konz. Schwefelsäure,
     1,0 Teile Hydrochinon und

163 Teile Acrylsäure

werden auf Siedetemperatur erhitzt.

Das Reaktionswasser wird azeotrop entfernt.

Nach ca. 8 Stunden werden das Cyclohexan und die überflüssige Acrylsäure durch Vakuumdestillation abgezogen.

Es resultiert ein viskoses Harz mit einer Säurezahl von 7.

B.   30 Teile   einer 50 %igen Lösung des nach A erhaltenen Polyesteracrylates in Hexandiol-1,6-diacrylat,

     20 Teile   Diäthylenglykoldiacrylat,

     40 Teile   einer 80 %igen Lösung des im Beispiel 1 näher bezeichneten Melaminharzes in Wasser und

     10 Teile   des in Beispiel 1 näher bezeichneten niedermolekularen Polyesterharzes

werden zusammengemischt zu einem Stammlack.

C.   81 Teile   des nach B erhaltenen Stammlackes werden mit

     10 Teilen hochdisperser Kieselsäure im Dissolver dispergiert und dieser Mischung vor der Verarbeitung

9 Teile einer 40 %igen wäßrigen Lösung von p-Toluolsulfonsäure zugemischt.

Danach werden mittels eines Drahtrakels 30 g/m² auf eine Hartfaserplatte aufgezogen und der Überzug anschließend nach der in Beispiel 1 beschriebenen Arbeitsweise mit Elektronenstrahlen und Infrarotstrahlen gehärtet.

Man erhält einen harten, kratzfesten und guthaftenden Lackfilm mit einem Glanzgrad von ca. 16 Einheiten nach DIN 67530 bei 60 Grad Meßwinkel.

Beispiel 14

Beispiel 13 wird wiederholt mit dem Unterschied, daß man anstelle der 50 %igen Lösung des nach 13 A erhaltenen Polyesteracrylates, eine 50 %ige Lösung eines Epoxidacrylates in Butandiol-1,4-diacrylat verwendet, erhalten durch Umsetzung von Acrylsäure mit den Epoxidgruppen eines Epoxidharzes aus einem Mol Bisphenol A und 2 Mol Epichlorhydrin.
Es resultieren Überzüge, die den Eigenschaften des Beispiels 13 entsprechen und einen Glanzgrad von 24 Einheiten nach DIN 67530 bei 60 Grad Meßwinkel besitzen.

0030285

Beispiel 15

A.  320 Teile  eines Polyesters aus Addipinsäure
               und Neopentylglykol mit einer OH-
               Zahl von 210,

     200 Teile  Isophorondiisocyanat und

     0,4 Teile  Dibutylzinndilaurat

werden auf 70° C erhitzt.

Nach 2,5 Stunden werden 69,5 Teile 2-Hydroxyäthylacrylat zugegeben und die Mischung solange bei 70° C
gerührt, bis alle Isocyanatgruppen umgesezt sind.
Das Reaktionsprodukt erstarrt beim Abfüllen auf Raumtemperatur.

B.  30 Teile  einer 50 %igen Lösung des nach A er-
              haltenen Urethanacrylates in Butandiol-
              1,4-diacrylat,

     20 Teile  Diäthylenglykoldiacrylat,

     40 Teile  einer 80 %igen Lösung des in Beispiel
               1 näher beschriebenen Melaminharzes in
               Wasser und

     10 Teile  des in Beispiel 1 näher beschriebenen
               niedrigmolekularen Polyesters

werden zu einem Stammlack vermischt.

0030285

C. 81 Teile des nach B erhaltenen Stammlackes werden mit

10 Teilen hochdispersen Siliciumdioxid mittels Dissolver zu einer innigen Mischung dispergiert.

Diese Mischung wird mit

9 Teilen einer 40 %igen wäßrigen Lösung von Paratoluolsulfonsäure versetzt und anschließend werden sofort 30 g/m² auf eine Hartfaserplatte aufgezogen und der Überzug anschließend unter den in Beispiel 1 beschriebenen Bedingungen mit Elektronenstrahlen und anschließenden Infrarotstrahlen gehärtet.

Der resultierende Lackfilm zeigt die gleichen Eigenschaften wie der nach Beispiel 13 erhaltene Film und hat einen Glanzgrad von 19 Einheiten.

Beispiel 16

Beispiel 14 wird wiederholt mit dem Unterschied, daß anstelle der 80 %igen wäßrigen Lösung des in Beispiel 1 näher beschriebenen Melaminharzes ein mit Methanol veräthertes Harnstofformaldehydharz (100 %ig) eingesetzt wird und anstelle des Epoxidacrylates ein ungesättigtes Acrylatharz eingesetzt wird, das
erhalten wird aus einem Acrylatpolymeren, in dem
Acrylsäureglycidylester einpolymerisiert ist und
dessen Epoxidgruppen weiter mit Acrylsäure verestert sind.

Es resultieren Überzüge, die den Eigenschaften des
Beispiels 6 entsprechen. Der Glanzgrad beträgt 17
Einheiten.

Beispiel 17

Beispiel 16 wird wiederholt mit der Maßgabe, daß anstelle des Harnstofformaldehydharzes ein mit Methanol
veräthertes Benzoguanamin-Formaldehydharz eingesetzt
wird.

Es resultieren Überzüge mit analogen Eigenschaften.
Der Glanzgrad beträgt 18 Einheiten.

Beispiel 18

Beispiel 11 wird wiederholt mit der Maßgabe, daß
anstelle des Melaminharzes ein Carbamidsäureesterharz
(Uresin B) eingesetzt wird. Es resultieren gehärtete
Überzüge mit den in Beispiel 11 beschriebenen Eigenschaften und einem Glanzgrad von 18 Einheiten.

Beispiel 19

Beispiel 1 wird wiederholt mit der Maßgabe, daß anstelle des Melaminharzes eine 60 %ige Lösung eines Phenolformaldehydharzes in Butanol eingesetzt wird. Es resultieren gehärtete Filme mit den in Beispiel 1 beschriebenen Eigenschaften.

Beispiel 20

Beispiel 6 wird wiederholt mit dem Unterschied, daß anstelle des dort eingesetzten Polyesterharzes ein hydroxylgruppenhaltiges Polyesterharz aus einem Mol Trimethylolpropan und 1,5 Mol Phthalsäure mit einem Hydroxylgehalt von ca. 11,5 %, einer Viskosität bei 25° C von 650 $\pm$ 100 Centipoise und einer Dichte nach DIN 51757 von ca. 1,03 verwendet wird. Zusätzlich werden dem Stammlack noch 5 Teile Clycerin zugemischt. Nach der in Beispiel 6 beschriebenen Arbeitsweise wird ein gehärteter Film erhalten, mit den in Beispiel 6 beschriebenen Eigenschaften und einem Glanzgrad von 23 Einheiten.

Erfolgt die Elektronenstrahlhärtung ohne Anwendung von Inertgas unter Luft, so beträgt der Glanzgrad des gehärteten Filmes ebenfalls 15 Einheiten.

0030285

## Beispiel 21

Beispiel 6 wird wiederholt mit dem Unterschied, daß
anstelle des dort eingesetzten Polyesterharzes ein
Epoxidharzester (60 %ig in Xylol) eingesetzt wird.
Es resultieren Überzüge mit den in Beispiel 6 genanten Eigenschaften und einem Glanzgrad von 8 Einheiten.

## Beispiel 22

Beispiel 6 wird wiederholt mit dem Unterschied, daß
anstelle des dort verwendeten Polyesterharzes die
gleiche Menge Äthylentriglykol eingesetzt wird.
Es resultieren gehärtete Überzüge die kratzfest sind
und einen Glanzgrad von 28 Einheiten nach DIN 67530
bei 60 Grad Meßwinkel aufweisen.

## Beispiel 23

27 Teile      der in Beispiel 1 näher beschriebenen
              60 %igen Lösung eines ungesättigten
              Polyesters in Butandiol-1,4-diacrylat
              werden mit

10 Teilen     Diäthylenglykoldiacrylat vermischt.
              Anschließend gibt man

30 Teile      eines Titandioxidpigmentes (Rutil-Typ)

hinzu und vermahlt das Gemisch in einer

Kugelmühle auf eine Feinheit von weniger

als 15 µm, gemessen im Grindometer.

Dem pastösen Mahlgut werden weiter

8 Teile    Diäthylenglykoldiacrylat,

36 Teile    der in Beispiel 1 näher beschriebenen

80 %igen wäßrigen Lösung des Melaminharzes und

9 Teile    des in Beispiel 1 näher beschriebenen

Polyesterharzes zugesetzt, wodurch eine

viskose Lackfarbe entsteht.

Vor der Verarbeitung gibt man dieser Farbe

10 Teile    einer 40 %igen wäßrigen Lösung von

p-Toluolsulfonsäure zu und verrührt

gleichmäßig.

Mit einem Drahtrakel werden von dieser Mischung ca.
30 g/m² auf ein mit Tränkharzen imprägniertes gehärtetes Phenolharzpapier aufgezogen und, wie in Beispiel 1 beschrieben, gehärtet.

Man erhält einen harten, kratzfesten, gut haftenden
weißen Lackfilm, mit glänzender Oberfläche, der
gute Flecken- und Chemikalienbeständigkeit aufweist.

0030285

**Beispiel 24**

24 Teile der 80 %igen Lösung, des in Beispiel 14 näher beschriebenen Epoxidacrylates in Äthyldiglykolacrylat werden mit

6,2 Teilen Äthyldiglykolacrylat verdünnt und

1,4 Teile Paliogenrot,

0,8 Teile Hostapermviolett,

2,9 Teile Molybdatrot,

0,1 Teil Titandioxidpigment (Rutil-Typ),

0,1 Teil Eisenoxidrot

zugegeben und auf einem Dreiwalzenstuhl zu einer Lackfarbe vermahlen. Anschließend werden mittels eines Dissolvers noch 4 Teile feindisperses Siliciumdioxid eindispergiert.

Zu dem pastösen Mahlgut werden

32 Teile der in Beispiel 1 beschriebenen Melaminharzlösung,

8 Teile Hexandiol-1,6,

10 Teile einer 40 %igen wäßrigen Lösung von Paratoluolsulfonsäure und

10,5 Teile 2-Äthyl-hexyl-acrylat hinzugegeben.

Von dieser verarbeitungsfähigen Mischung werden mit einem Drahtrakel 30 g/m² auf ein phosphatiertes Stahlblech aufgerakelt. Anschließend wird der Überzug in einer Elektronenstrahlanlage mit beschleunigten Elektronen bei 150 kV Spannung, 5 mA Stromstärke und 5 m/min Geschwindigkeit unter Inertgasatmosphäre gehärtet und anschließend 7 Sekunden mit Infrarotstrahlen weitergehärtet.

Man erhält einen harten, kratzfesten Lackfilm, mit seidenglänzender Oberfläche, der gute Flecken- und Chemikalienbeständigkeit aufweist.

Im Gegensatz zu den üblichen strahlenhärtbaren Überzügen besitzt der Film eine extrem gute Haftung auf Stahlblech (Gitterschnittprüfung : 0, Tesa-Abriß-Versuch : 0). Der Überzug besitzt ferner eine gute Beständigkeit gegen schlagartige Verformung ("Impact-Test" : 2 kg - Gewicht aus 95 cm Fallhöhe, es entsteht ein halbkugelförmiger Eindruck im Blech und Lack, ohne Verletzung des Filmes).

Beispiel 25

Das Beispiel 1 wird wiederholt mit der Maßgabe, daß auf 95 Teile des verarbeitungsfähigen Überzugsgemisches noch 4 Teile Benzildimethylketal als Photoinitiator hinzugefügt werden.

Mit einem Drahtrakel wird dieses Gemisch dann mit 30 g/m² auf eine Hartfaserplatte aufgebracht und mit einer Geschwindigkeit von 5 m/min an einer Quecksilberhochdrucklampe (80 W/cm) in einem Abstand von 10 cm vorbeigeführt. Anschließend wird in einem Abstand von 3 cm mit Infrarotstrahlen bestrahlt. Man erhält durch diese Verfahrensweise ebenfalls einen harten, kratzfesten, glänzenden Überzug.

Beispiel 26

| 30 Teile | eines monomerenfreien flüssigen Epoxidacrylates, |
| 55 Teile | der in Beispiel 1 näher beschriebenen Melaminharzlösung, |
| 15 Teile | des in Beispiel 1 näher bezeichneten Polyesterharzes |

werden vermischt. Zu 90 Teilen dieses Gemisches werden

| 10 Teile | einer 40 %igen wäßrigen Lösung von p-Toluolsulfonsäure |

zugefügt und nach dem Homogenisieren wird das viskose Gemisch mit 30 g/m² auf eine Hartfaserplatte aufgetragen. Die Härtung erfolgt nach der in Beispiel 1 beschriebenen Weise.

Man erhält einen harten, kratzfestern Überzug mit guter Haftung und einwandfreier Flecken- und Chemikalienbeständigkeit.

Beispiel 27

Auf die Oberseite eines mit einem Tränkharz auf Basis eines Melamin-Formaldehyd-Kondensationsproduktes getränkten Dekorpapieres mit einem Holzmaserdruck werden mittels Drahtrakel 50 g/m² des die p-Toluolsulfonsäure enthaltenden verarbeitungsfähigen Überzugsgemisches des Beispiels 1 aufgebracht. Das beschichtete Papier wird anschließend einer Elektronenstrahlanlage mit beschleunigten Elektronen von 150 kV Spannung, 5 mA Stromstärke bei einer Vorschubgeschwindigkeit von 25 m/min unter Stickstoff als Inertgas zugeführt und bestrahlt. Danach wird in üblicher Weise bei einer Temperatur von 100° C unter Anwendung eines Preßdruckes von 3 bis 5 kg/cm² innerhalb von 2 Minuten oder bei einem Preßdruck von 17 bis 20 kg/cm² bei 170 bis 200° C innerhalb von 20 Sekunden verpreßt.

Man erhält eine Folie mit einem haftfesten, glänzenden Überzug. Diese Folie kann in der Möbelherstellung in der üblichen Weise auf Spanholzplatten mittels Furnierpreßen als Fertigeffektfolie aufgeklebt werden.

Die Überzugsschicht kann im Bedarfsfall mit üblichen

0030285

Lacken weiterlackiert werden.


**Beispiel 28**


Beispiel 1 wird wiederholt mit dem Unterschied, daß nach der Applikation des Überzugsgemisches auf die Hartfaserplatte auf die noch flüssige Schicht ein bedrucktes Dekorpapier (65 g/m²) aufgewalzt wird, wonach dann die Bestrahlung mit Elektronenstrahlen erfolgt. Anschließend wird bei 150° C 45 Sekunden lang unter einem Druck von 5 bar verpreßt. Es entsteht eine voll durchgehärtete Klebeschicht mit hoher Belastbarkeit durch Temperatur, Feuchte und andere Einflüsse, wie haushaltsübliche Chemikalien.

Dieses Beispiel zeigt, daß sich die erfindungsgemäßen Überzugsgemische auch als Kleber eignen.

Patentansprüche:

1. Verfahren zum Herstellen von Filmen oder Überzügen auf Basis von durch Strahlen härtbaren Kunstharzen, dadurch gekennzeichnet, daß man Kunstharze mit polymerisierbaren C-C-Doppelbindungen gegebenenfalls zusammen mit copolymerisierbaren Monomeren in Kombination mit Aminoplastharzen oder Phenoplastharzen und zusätzlich polykondensationsfähigen Verbindungen, gegebenenfalls mit Härtungsbeschleunigern und gegebenenfalls zusätzlich Lösungsmitteln, Pigmenten, Füllstoffen der aufeinanderfolgenden kombinierten Einwirkung von ionisierenden Strahlen oder UV-Strahlen und Wärmestrahlen oder Heißluft unterwirft, bis der gesamte Film oder Überzug gehärtet ist.

2. Verfahren nach Anspruch 1, dadurch gekennzeichnet, daß man als Kunstharz mit polymerisierbaren C-C-Doppelbindungen ungesättigte Polyesterharze verwendet.

3. Verfahren nach Anspruch 1, dadurch gekennzeichnet, daß man als Kunstharz mit polymerisierbaren C-C-Doppelbindungen Polyesteracrylate, Ätheracrylate, Epoxidacrylate oder Urethanacrylate verwendet.

4. Verfahren nach Anspruch 1, dadurch gekennzeichnet, daß man als Kunstharz mit polymerisierbaren C-C-Doppelbindungen ungesättigte Acrylatharze verwendet.

5. Verfahren nach den Ansprüchen 1 bis 4, dadurch gekennzeichnet, daß man als polykondensationsfähige Verbindungen niedermolekulare Polyesterharze verwendet.

6. Verfahren nach den Ansprüchen 1 bis 4, dadurch gekennzeichnet, daß man als polykondensationsfähige Verbindungen Alkydharze verwendet.

7. Verfahren nach den Ansprüchen 1 bis 4, dadurch gekennzeichnet, daß man als polykondensationsfähige Verbindungen polyvalente Alkohole verwendet.

8. Verfahren nach den Ansprüchen 1 bis 7, dadurch gekennzeichnet, daß die Kombination aus Kunstharz mit polymerisierbaren C-C-Doppelbindungen, gegebenenfalls copolymerisierbaren Monomeren, Aminoplastharzen und polykondensationsfähigen Verbindungen aus 15 bis 60 Gew.-% Kunstharz mit polymerisierbaren C-C-Doppelbindungen und gegebenenfalls copolymerisierbaren Monomeren und 40 bis 85 Gew.-% Aminoplastharz bzw. Phenoplastharz und polykondensationsfähigen Verbindungen besteht, wobei die Summe stets 100 Gew.-% beträgt.

9. Verfahren nach den Ansprüchen 1 bis 8, dadurch gekennzeichnet, daß man als Härtungsbeschleuniger Photoinitiatoren und/oder Säuren oder säureabspaltende Verbindungen verwendet.

10. Verfahren nach den Ansprüchen 1 bis 9, dadurch gekennzeichnet, daß man den Film oder Überzug zuerst der Einwirkung von ionisierenden Strahlen oder von UV-Strahlen und daran anschließend der Einwirkung von Wärmestrahlen oder Heißluft unterwirft.

11. Verfahren nach den Ansprüchen 1 bis 9, dadurch gekennzeichnet, daß man den Film oder Überzug zuerst der Einwirkung von Wärmestrahlen oder von Heißluft und daran

- 4 -                    0030285

anschließend der Einwirkung von ionisierenden Strahlen oder UV-Strahlen unterwirft.

12. Überzugsgemisch zur Durchführung des Verfahrens nach den Ansprüchen 1 bis 11, dadurch gekennzeichnet, daß es Kunstharze mit polymerisierbaren C-C-Doppelbindungen, gegebenenfalls zusammen mit copolymerisierbaren Monomeren in Kombination mit Aminoplastharzen oder Phenoplastharzen und zusätzlich polykondensationsfähigen Verbindungen, gegebenenfalls mit Härtungsbeschleunigern und gegebenenfalls zusätzlich Lösungsmitteln, Pigmenten, Füllstoffen enthält.

13. Verwendung des Überzugsgemisches nach Anspruch 12 in dem Verfahren nach den Ansprüchen 1 bis 11, zum Herstellen von Filmen oder Überzügen durch aufeinanderfolgendes kombiniertes Einwirken von ionisierenden Strahlen oder UV-Strahlen und Wärmestrahlen oder Heißluft auf einen Film oder Überzug aus dem Überzugsgemisch bis dieser gehärtet ist.